# EUROPÄISCHE PATENTSCHRIFT

(11) **EP 0 753 919 B1**
(45) Veröffentlichungstag und Bekanntmachung des Hinweises auf die Patenterteilung: **07.10.1998**
(21) Anmeldenummer: 96201920.4
(22) Anmeldetag: 09.07.1996
(51) Int. Cl.: H02G 3/06

(54) **Kombination einer elektrischen Dose und eines Einführungselementes, und für eine derartige Kombination vorgesehene Dose oder Einführungselement**
Electrical box and entry combination and box and entry therefor
Combinaison de boîtier électrique et d'élément d'entrée ainsi que boîtier et élément d'entrée associés

(30) Priorität: 11.07.1995 NL 1000779; 29.09.1995 NL 1001315
(43) Veröffentlichungstag der Anmeldung: 15.01.1997
(73) Patentinhaber: B.V. Kunststoffenindustrie Attema, NL-4203 NN Gorinchem (NL)
(72) Erfinder: Romijn, Jan, 4205 KM Gorinchem (NL)
(74) Vertreter: Mertens, Hans Victor

(56) Entgegenhaltungen:
- EP-A- 0 325 898
- WO-A-91/02172
- FR-A- 2 501 928
- US-A- 4 302 035
- IBM TECHNICAL DISCLOSURE BULLETIN, Bd. 20, Nr. 3, NEW YORK US, Seite 890 XP000579930 HENRY: "push-on nut"

## Beschreibung

Die Erfinding bezieht sich auf eine Kombination einer elektrischen Dose, wie eine Verbindungs- oder eine Kabeldose, und eines Einführungselement zum Einführen eines elektrischen Leiters in die Dose, das ein teilweise mit einem Schraubengewinde versehenes Zapfenende aufweist, das dazu vorgesehen ist, mit einer mit zugehörigem Schraubengewinde versehenen Einfuhr der Dose verbunden zu werden. Diese Erfindung bezieht sich zugleich auf ein Einführungselement und eine Dose, die für Anwendung in einer derartigen Kombination vorgesehen sind.

Obengenannte Kombination von Dose und Einführungselement ist in vielen Variationen bekannt, zum Beispiel aus der amerikanischen Patentschrift 4.302.035. Bei Gebrauch wird das Einführungselement mittels einer für die Anwendung geeignete Schraubverbindung an der zugehörigen Dose befestigt. Die Dose kann mit einer Öffnung ("Pforte") mit Innengewinde versehen sein. Oft können für ein bestimmtes Dosenfabrikat Einführungselemente eines beliebigen anderen Fabrikats angewendet werden, vorausgesetzt, daß das Schraubengewinde der beiden Komponenten übereinstimmt.

Ein großer Nachteil der bekannten Kombination von Dose und Einführungselement ist die Umständlichkeit und der Zeitaufwand des Einschraubens des Einführungselementes in die Dose, wozu das Einführungselement eine Vielzahl, sechs zum Beispiel, von Umdrehungen gedreht werden muß.

Der Erfindung liegt die Aufgabe zugrunde, obengenannten Nachteil zu beheben und in erster Linie eine Kombination der eingangs genannten Gattung zu schaffen, deren mit zumindestens einem im Zapfenende axial ausgerichteten Schlitz versehenes Einführungselement, schnell und einfach mit der Hand in der Dose anzuordnen ist, und das dadurch gekennzeichnet ist, daß die Einfuhr der Dose mit einem dem Schraubengewinde des Einführungselementes zugehörigen Schraubengewinde versehen ist und, zusätzlich zu dem Schlitz im Einführungselement, oder statt dieses Schlitzes im Einführungselement mit zumindestens einem axial ausgerichteten Schlitz versehen ist, wobei das Schraubengewinde des Einführungselementes und/oder der Doseneinfuhr sich ausschließlich über einen zentralen Teil des zumindesten einen axial ausgerichteten Schlitzes erstreckt und wobei der Schlitz am freien Ende des Zapfenendes des Einführungselementes und/oder der Schlitz am freien Ende der Doseneinfuhr geschlossen ist. Hierdurch braucht die Verbindung zwischen dem Einführungselement und der Dose nicht mehr gänzlich geschraubt zu werden; es genügt, wenn man das Zapfenende des Einführungselementes nahezu vollständig in die Einfuhr der Dose preßt, wonach das Einführungselement mit einer beschränkten Drehbewegung völlig in der Doseneinfuhr arretiert wird. Dank des Schlitzes oder der Schlitze können die solcherart erhaltenen Teile des Zapfenendes des Einführungselementes und/oder die Doseneinfuhr sich wenigstens örtlich in radiale Richting federnd wegbiegen, was das Pressen des Zapfenendes des Einführungselementes in die Doseneinfuhr ermöglicht. Der Schlitz kann bis an das freie Ende des Zapfenendes des Einführungselementes oder der Doseneinfuhr weiterlaufen, kann jedoch auch, ehe das freie Ende erreicht ist, enden. Beide Schlitzarten können in einem Zapfenende des Einführungselementes oder der Doseneinfuhr vorgesehen sein.

Um die Verbindung zwischen dem Einführungselement und der Doseneinfuhr mit möglichst wenig Kraft zustande bringen zu können, nimmt das Schraubengewinde des Zapfenendes des Einführungselementes oder der Doseneinfuhr nur einen Teil des Zapfenendes des Einführungselementes oder der Doseneinfuhr ein, insbesondere mindestens eine Schraubenwindung.

Vorzugsweise ist das Zapfenende des Einführungselementes mit einem Außengewinde ausgeführt (wobei die Doseneinfuhr als eine Pforte mit Innengewinde ausgeführt werden soll, und gegebenfalls als eine auswärts aus der Dosenwand herausragende Tülle mit Innengewinde), grundsätzlich jedoch kann das Zapfenende des Einführungselementes andererseits auch mit Innengewinde ausgeführt werden (wobei die Doseneinfuhr eine auswärts aus der Dosenwand herausragende Tülle mit Außengewinde umfassen wird).

Das Einführungselement ist in einer bevorzugten Ausgestaltung in der Nähe des mit einem Schraubengewinde versehenen Zapfenendes an der Außenseite des Einführungselementes mit zumindestens einer Ausnehmung versehen. Die Ausnehmung bietet die Möglichkeit, das Einführungselement mit Hilfe eines einfachen Gerätes, wie eines Schraubenziehers, schnell aus einer Doseneinfuhr herauszudrücken, in derselben Weise - jedoch in entgegengesetzter Richtung - wie während der früheren Phase des Verbindens des Einführungselementes mit der Dose. Die Doseneinfuhr kann mit einer ähnlichen Ausnehmung versehen sein.

Das Einführungselement ist in allgemeiner Form im Anspruch 4, die elektrische Dose im Anspruch 11 definiert. Die Erfindung wird nachfolgend anhand der beigefügten Zeichnung erläutert, in der
- Fig. 1: ein Einführungselement in einem Längsschnitt nach der Linie I - I in Fig. 2 zeigt;
- Fig. 2: eine Obenansicht auf das Einführungselement der Fig. 1 zeigt;
- Fig. 3: eine Untenansicht auf das Einführungselement nach Fig. 1 zeigt;
- Fig. 4: eine Seitenansicht einer Ausgestaltung eines Zapfenendes des erfindungsgemäßen Einführungselementes zeigt; und
- Fig. 5: einen abgebrochnen Schnitt einer Kombination eines Einführungselementes und einer Dose zeigt.

In den unterschiedlichen Figuren beziehen sich die gleichen Bezugszeichen auf die gleichen Teile oder die Teile mit einer gleichen Funktion.

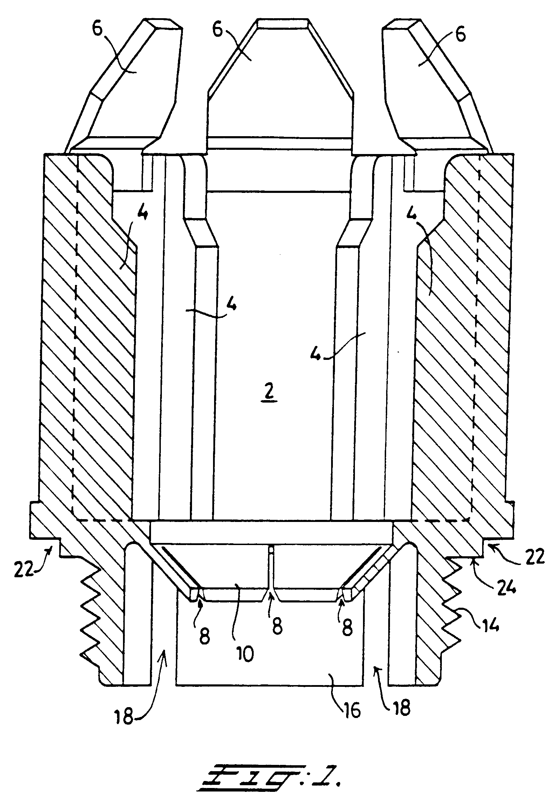

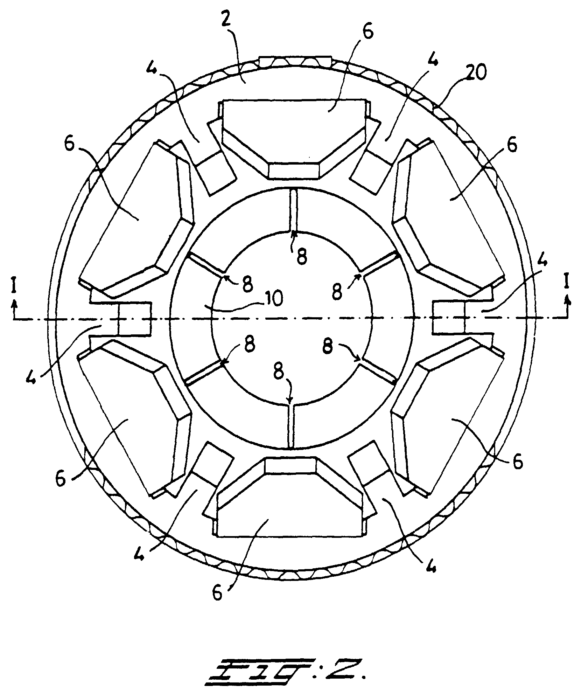

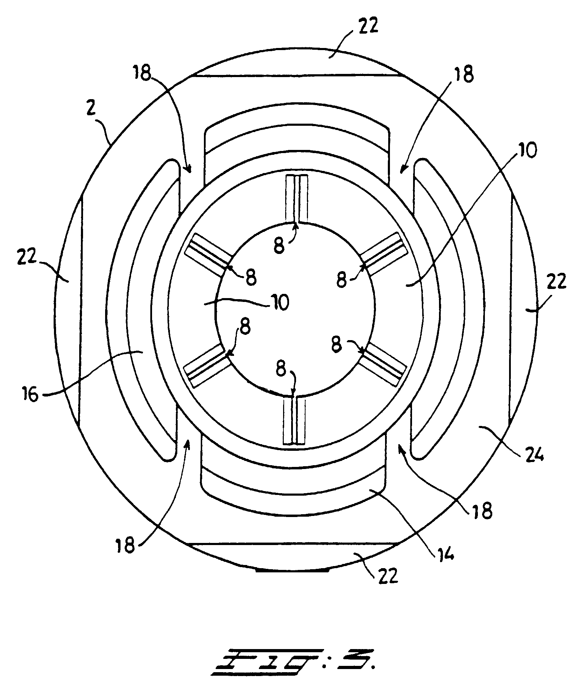

Fig. 1 bis 3 zeigen ein Einführungselement mit einem im wesentlichen rohrförmigen Körperteil 2, wo an seiner Innenseite entlang dem Umfang eine Anzahl, in diesem Fall sechs, axial ausgerichteter Rippen 4 angeordnet sind. Der Körperteil 2 ist mit einer Anzahl, in diesem Fall sechs, Laschen 6 versehen, die sich jeweils federnd gelenkig bis in das Innere des Körperteils 2 um eine Achse drehen können, die in einem Laschenteil liegt, der mit einer geringen Stärke an den Körperteil 2 angrenzt und senkrecht auf die zentrale Achse des Körperteils 2 ausgerichtet ist.

Der Körperteil 2 ist an dem den Laschen 6 abgekehrten Ende mit einem im wesentlichen abgestutzt konischen, mit Einschnitten 8 versehenen Kragen 10 versehen.

Der Kragen 10 ist in einem im wesentlichen rohrförmigen, mit einem Außengewinde 14 versehenen Zapfenende 16 angeordnet, in dem eine Anzahl, in diesem Fall vier, Einschnitte oder Schlitze 18 angeordnet sind.

Der Körperteil 2 ist über einem Teil seiner Außenoberfläche mit wellenartigen, parallel zu der zentralen Achse des Körperteils 2 ausgerichteten Rippen 20 versehen. In der Nähe des Übergangs zwischen dem Körperteil 2 und dem Zapfenende 16 sind Ausnehmungen 22 angeordnet.

Das Einführungselement ist integral aus einem flexiblen und elastischen Material hergestellt.

Die Anwendung des in Fig. 1 bis 3 gezeigten Einführungselementes ist folgendermaßen. Das Einführungselement wird in einer Dose mit mit einem Innengewinde versehenen, sich in der Dose erstreckenden Pforten arretiert, indem das Zapfenende 16 des Einführungselementes einfach ohne Drehbewegung in die Pforte der Dose gepreßt wird, wobei sich die Teile des mit Schlitzen versehenen Zapfenendes 16 radial einwärts biegen und das Schraubengewinde 14 in axiale Richtung des Körperteils 2 entlang dem Schraubengewinde der Dosenöffnung rattert, bis die Wand 24 des Einführungselementes sich in der Nähe, bzw. an der Wand der Dose befindet. Anschließend kann das Einführungselement mit der Hand in höchtens einer Umdrehung in der Dosenöffnung festgedreht werden. Die Rippen 20 schaffen hierzu einen ausreichenden Griff. Hiermit ist die Anzahl Handlungen zum in einer Dose anordnen des Einführungselementes in bezug auf die konventionelle Art des Festschraubens des Einführungselementes erheblich beschränkt. Demzufolge wird bei der Montage Zeit gespart.

Das Entfernen des Einführungselementes aus einer Dose kann einfach mit einem Schraubenzieher oder dergleichen erfolgen, indem dieser in eine Ausnehmung 22 gestellt wird und als Hebel gegen eine angrenzende Wand der Dose verwendet wird. Dabei werden sich die Teile des eingeschnittenen Zapfenendes 16 radial einwärts verbiegen, wodurch das Einführungselement in axiale Richtung ohne Schraubbewegung entfernt werden kann.

Es wird bemerkt, daß an der Außenseite der Dose in der Nähe der Doseneinfuhr zumindestens eine Ausnehmung in der Dosenwand mit der gleichen Funktion wie die Ausnehmung 22 des Einführungselement angeordnet sein kann. In diesem Fall kann die Ausnehmung 22 in dem zugehörigen Einführungselement entfallen.

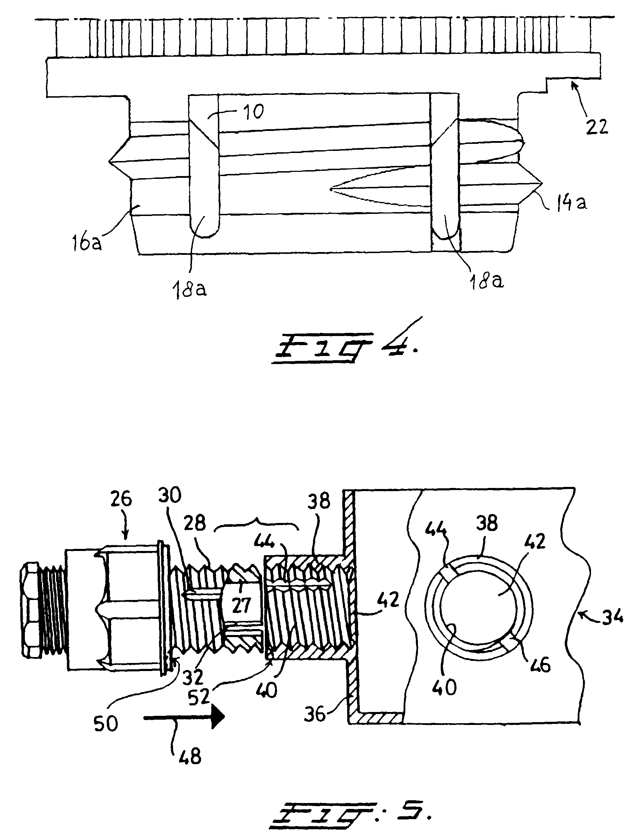

Fig. 4 zeigt ein Zapfenende 16a eines nur teilweise dargestellten Einführungselementes. Das Zapfenende 16a ist mit vier Schlitzen 18a versehen, von denen zwei bis an das freie Ende des Zapfenendes 16a weiterlaufen, und die beiden anderen sich bis in die Nähe des freien Endes des Zapfenendes 16a erstrecken. Gleichgestaltige Schlitze befinden sich diametral gegenüber einander. Das Schraubengewinde 14a nimmt nur einen Teil des Zapfenendes 16a ein und umfaßt nur gut eine Schraubenwindung.

Fig. 5 zeigt eine Überwurfmutter 26, die mit einem Zapfenende 27 mit Außengewinde 28 versehen ist. In dem Zapfenende 27 sind zwei Schlitze 30 und 32 angeordnet. Eine Dose 34 weist eine Anzahl von der Dosenwand ausgehender Tüllen 38 auf, die mit einem Innengewinde 40 versehen sind. An dem der Dose zugekehrten Ende der Tüllen 38 ist eine Brechwand 42 angeordnet. Die Tüllen 38 sind je mit zwei Schlitzen 44 und 46 versehen. Dank der Schlitze 30, 32, 44 und 46 kann die Überwurfmutter 26 bei der Montage in Richtung auf den Pfeil 48 nahezu vollständig ohne Drehbewegung in die zugehörige Tülle 38 gepreßt werden. Die Überwurfmutter 26 wird endgültig durch eine letzte, sehr beschränkte Schraubbewegung arretiert. Während das Zapfenende 27 in die Tülle 38 gepreßt wird, werden sich die Segmente des Zapfenendes 27 radial einwärts biegen, während die Segmente der Tülle 38 sich radial auswärts biegen. Es wird deutlich sein, daß es zum Erreichen einer ähnlichen Wirkung auch möglich ist, ausschließlich das Zapfenende 27 oder die Tülle 38 mit Schlitzen zu versehen.

Das Entfernen des Einführungselementes 26 aus der Tülle 38 wird erleichtert durch das Anordnen einer strichlinierten Ausnehmung in dem Einführungselement an der Stelle, die mit Pfeil 50 und/oder in der Tülle 38 an der Stelle, die mit Pfeil 52 angedeutet ist. Die Funktion und die Anwendung derartiger Ausnehmungen sind bereits in bezug auf Ausnehmung 22 (sieh Fig. 1 bis 3) oben beschrieben.

## Patentansprüche

1. Kombination einer elektrischen Dose, wie eine Verbindungs- oder eine Kabeldose, und eines Einführungselementes zum Einführen eines elektrischen Leiters in die Dose, das ein teilweise mit einem Schraubengewinde (14a) versehenes Zapfenende (16a) aufweist, das dazu vorgesehen ist, mit einer Einfuhr der Dose verbunden zu werden, wobei das Zapfenende (16a) des Einführungselementes mit zumindenstens einem axial ausgerichteten Schlitz (18a) versehen ist, dadurch gekennzeichnet, daß die Einfuhr der Dose mit einem dem Schraubengewinde (14a) des Einführungselementes zugehörigen Schraubengewinde versehen ist und, zusätzlich zu dem Schlitz im Einführungselement, oder statt dieses Schlitzes im Einführungselement mit zumindestens einem axial ausgerichtetem Schlitz (44, 46) versehen ist, wobei das Schraubengewinde (14a) des Einführungselementes und/oder die Doseneinfuhr sich ausschließlich über einen zentralen Teil des zumindesten einen axial ausgerichteten Schlitzes (18a) erstreckt und wobei der Schlitz am freien Ende des Zapfenendes (16a) des Einführungselementes und/oder der Schlitz (44, 46) am freien Ende der Doseneinfuhr geschlossen ist.

2. Kombination nach Anspruch 1, dadurch gekennzeichnet, daß das Schraubengewinde (14a) mindestens eine Schraubenwindung umfaßt.

3. Kombination nach Anspruch 1 oder 2, dadurch gekennzeichnet, daß das Einführungselement und/oder die Doseneinfuhr mit zumindestens einem Schlitz versehen ist/sind, der am freien Ende des Zapfenendes (16a) des Einführungselementes und/oder am freien Ende der Doseneinfuhr offen ist.

4. Einführungselement zum Einführen eines elektrischen Leiters in eine elektrische Dose, wie eine Verbindungs- oder Kabeldose, mit einem teilweise mit Schraubengewinde (14a) versehenen Zapfenende (16a), das dazu vorgesehen ist, mit einer Einfuhr der Dose verbunden zu werden, wobei das Zapfenende des Einführungselementes mit zumindenstens einem axial ausgerichteten Schlitz (18a) versehen ist, dadurch gekennzeichnet, daß das Schraubengewinde (14a) sich ausschließlich über einen zentralen Teil des Schlitzes (18a) erstreckt, welcher Schlitz (18a) am freien Ende des Zapfenendes (16a) geschlossen ist.

5. Einführungselement nach Anspruch 4, dadurch gekennzeichnet, daß das Schraubengewinde (14a) mindestens eine Schraubenwindung umfaßt.

6. Einführungselement nach Anspruch 4 oder 5, dadurch gekennzeichnet, daß das Zapfenende (16a) mit zumindestens einem Schlitz versehen ist, der am freien Ende des Einführungselementes (16a) offen ist.

7. Einführungselement nach Anspruch 6, dadurch gekennzeichnet, daß das Zapfenende (16a) mit zwei am freien Ende des Zapfenendes (16a) geschlossenen Schlitzen und mit zwei am freien Ende des Zapfenendes (16a) offenen Schlitzen versehen ist.

8. Einführungselement nach Anspruch 7, dadurch gekennzeichnet, daß die am freien Ende des Zapfenendes (16a) geschlossenen Schlitze einander diametral gegenüberliegen, und daß die am freien Ende des Zapfenendes (16a) offenen Schlitze einander diametral gegenüberliegen.

9. Einführungselement nach einem der Ansprüche 4 bis 8, dadurch gekennzeichnet, daß das Zapfenende (16a) mit einem Außengewinde (14a) versehen ist.

10. Einführungselement nach einem der Ansprüche 4 bis 9, dadurch gekennzeichnet, daß in der Nähe des Zapfenendes (16a) an der Außenseite des Einführungselementes zumindestens eine Ausnehmung (22; 50) angeordnet ist.

11. Elektrische Dose, wie eine Verbindungs- oder Kabeldose, mit zumindestens einer mit Schraubengewinde versehenen Einfuhr, die dazu vorgesehen ist, mit einem mit Schraubengewinde versehenen Zapfenende (16a) eines Einführungselementes zwecks Einführens eines elektrischen Leiters in die Dose verbunden zu werden, dadurch gekennzeichnet, daß die Einfuhr der Dose (34) mit zumindestens einem axial ausgerichteten Schlitz (44, 46) versehen ist, wobei das Schraubengewinde sich ausschließlich über einen zentralen Teil des Schlitzes erstreckt, welcher Schlitz am freien Ende der Doseneinfuhr geschlossen ist.

12. Dose nach Anspruch 11, dadurch gekennzeichnet, daß das Schraubengewinde mindestens eine Schraubenwindung umfaßt.

13. Dose nach Anspruch 11 oder 12, dadurch gekennzeichnet, daß die Einfuhr der Dose (34) aus einer ab der Wand (36) der Dose auswärts herausragenden Tülle besteht.

14. Dose nach Anspruch 13, dadurch gekennzeichnet, daß die Tülle (38) mit einem Innengewinde versehen ist.

15. Dose nach einem der Ansprüche 11 bis 14, dadurch gekennzeichnet, daß die Doseneinfuhr an der dem Einführungselement zuzukehrenden Seite (52) mit zumindestens einer Ausnehmung versehen ist.

## Claims

1. Combination of an electric socket, such as a connection box or cable socket, and a lead-in element for inserting an electric lead into the socket, which comprises a plug end (16a) partially provided with a screw thread (14a), which is adapted to be connected to an inlet of the socket, the plug end (16a) of the lead-in element being provided with at least one axially aligned slot (18a), characterised in that the inlet of the socket is provided with a screw thread associated with the screw thread (14a) of the lead-in element and, in addition to the slot in the lead-in element or instead of this slot in the lead-in element, has at least one axially aligned slot (44, 46), the screw thread (14a) of the lead-in element and/or the socket inlet extending exclusively over a central part of the or each axially aligned slot (18a), the slot at the free end of the plug end (16a) of the lead-in element and/or the slot (44, 46) at the free end of the socket inlet being closed.

2. Combination according to claim 1, characterised in that the screw thread (14a) comprises at least one turn.

3. Combination according to claim 1 or 2, characterised in that the lead-in element and/or the socket inlet is/are provided with at least one slot which is open at the free end of the plug end (16a) of the lead-in element and/or at the free end of the socket inlet.

4. Lead-in element for inserting an electric lead into an electric socket, such as a connection box or cable socket, having a plug end (16a) partially provided with a screw thread (14a), which is adapted to be connected to an inlet of the socket, the plug end of the lead-in element being provided with at least one axially aligned slot (18a), characterised in that the screw thread (14a) extends exclusively over a central part of the slot (18a), the slot (18a) being closed at the free end of the plug end (16a).

5. Lead-in element according to claim 4, characterised in that the screw thread (14a) comprises at least one turn.

6. Lead-in element according to claim 4 or 5, characterised in that the plug end (16a) is provided with at least one slot which is open at the free end of the lead-in element (16a).

7. Lead-in element according to claim 6, characterised in that the plug end (16a) is provided with two slots which are closed at the free end of the plug end (16a) and two slots which are open at the free end of the plug end (16a).

8. Lead-in element according to claim 7, characterised in that the slots which are closed at the free end of the plug end (16a) are diametrically opposite one another and the slots which are open at the free end of the plug end (16a) are diametrically opposite one another.

9. Lead-in element according to one of claims 4 to 8, characterised in that the plug end (16a) is provided with an external thread (14a).

10. Lead-in element according to one of claims 4 to 9, characterised in that at least one recess (22; 50) is provided in the region of the plug end (16a) on the outside of the lead-in element.

11. Electric socket such as a connection box or cable socket, having at least one screw-threaded inlet which is adapted to be connected to a screw-threaded plug end (16a) of a lead-in element for inserting an electric lead into the socket, characterised in that the inlet of the socket (34) is provided with at least one axially aligned slot (44, 46), the screw thread extending exclusively over a central part of the slot, said slot being closed at the free end of the socket inlet.

12. Socket according to claim 11, characterised in that the screw thread comprises at least one turn.

13. Socket according to claim 11 or 12, characterised in that the inlet of the socket (34) consists of a bush projecting outwards from the wall (36) of the socket.

14. Socket according to claim 13, characterised in that the bush (38) has an internal thread.

15. Socket according to one of claims 11 to 14, characterised in that the socket inlet is provided with at least one recess on the side (52) which is adapted to face the lead-in element.

## Revendications

1. Combinaison d'un boîtier électrique, comme un boîtier de liaison ou un boîtier de câble, et d'un élément d'introduction pour introduire un conducteur électrique dans le boîtier, qui présente une extrémité de tenon (16a) pourvue partiellement d'un filet de vis (14a), laquelle extrémité est prévue pour être reliée à une entrée du boîtier, l'extrémité de tenon (16a) de l'élément d'introduction étant pourvue d'au moins une fente (18a) orientée axialement, caractérisée en ce que l'entrée du boîtier est pourvue d'un filet de vis spécifique au filet de vis (14a) de l'élément d'introduction et, en supplément de la fente dans l'élément d'introduction, ou au lieu de cette fente dans l'élément d'introduction, est pourvu d'au moins une fente (44, 46) orientée axialement, le filet de vis (14a) de l'élément d'introduction et/ou l'entrée de boîtier s'étendant exclusivement sur une partie centrale de la au moins une fente (18a) orientée axialement et la fente étant fermée sur l'extrémité libre de l'extrémité de tenon (16a) de l'élément d'introduction et/ou la fente (44, 46) sur l'extrémité libre de l'entrée du boîtier.

2. Combinaison selon la revendication 1, caractérisée en ce que le filet de vis (14a) comprend au moins une spire.

3. Combinaison selon la revendication 1 ou 2, caractérisée en ce que l'élément d'introduction et/ou l'entrée du boîtier est/sont pourvu(s) d'au moins une fente, qui est ouverte sur l'extrémité libre de l'extrémité de tenon (16a) de l'élément d'introduction et/ou sur l'extrémité libre de l'entrée du boîtier.

4. Elément d'introduction pour introduire un conducteur électrique dans un boîtier électrique, comme un boîtier de liaison ou un boîtier de câble, avec une extrémité de tenon (16a) pourvue en partie de filet de vis (14a), qui est prévue pour être reliée à l'entrée du boîtier, l'extrémité de tenon de l'élément d'introduction étant pourvue d'au moins une fente (18a) orientée axialement, caractérisé en ce que le filet de vis (14a) s'étend exclusivement sur une partie centrale de la fente (18a), laquelle fente (18a) est fermée sur l'extrémité libre de l'extrémité de tenon (16a).

5. Elément d'introduction selon la revendication 4, caractérisé en ce que le filet de vis (14a) comprend au moins une spire.

6. Elément d'introduction selon la revendication 4 ou 5, caractérisé en ce que l'extrémité de tenon (16a) est pourvue d'au moins une fente qui est ouverte sur l'extrémité libre de l'élément d'introduction (16a).

7. Elément d'introduction selon la revendication 6, caractérisé en ce que l'extrémité de tenon (16a) est pourvue de deux fentes fermées sur l'extrémité libre de l'extrémité de tenon (16a) et de deux fentes ouvertes sur l'extrémité libre de l'extrémité de tenon (16a).

8. Elément d'introduction selon la revendication 7, caractérisé en ce que les fentes fermées sur l'extrémité libre de l'extrémité de tenon (16a) sont diamétralement opposées, et en ce que les fentes ouvertes sur l'extrémité libre de l'extrémité de tenon (16a) sont diamétralement opposées.

9. Elément d'introduction selon l'une quelconque des revendications 4 à 8, caractérisé en ce que l'extrémité de tenon (16a) est pourvue d'un filet extérieur (14a).

10. Elément d'introduction selon l'une quelconque des revendications 4 à 9, caractérisé en ce qu'au moins un évidement (22 ; 50) est disposé à proximité de l'extrémité de tenon (16a) sur le côté extérieur de l'élément d'introduction.

11. Boîtier électrique, comme un boîtier de liaison ou un boîtier de câble, avec au moins une entrée pourvue d'un filet de vis, qui est prévue pour être reliée à une extrémité de tenon (16a), pourvue d'un filet de vis, d'un élément d'introduction, pour l'introduction d'un conducteur électrique dans le boîtier, caractérisé en ce que l'entrée du boîtier (34) est pourvue d'au moins une fente (44, 46) orientée axialement, le filet de vis s'étendant exclusivement sur une partie centrale de la fente, laquelle fente est fermée sur l'extrémité libre de l'entrée du boîtier.

12. Boîtier selon la revendication 11, caractérisé en ce que le filet de vis comprend au moins une spire.

13. Boîtier selon la revendication 11 ou 12, caractérisé en ce que l'entrée du boîtier (34) comprend un passe-câble qui dépasse vers l'extérieur à partir de la paroi (36) du boîtier.

14. Boîtier selon la revendication 13, caractérisé en ce que le passe-câble (38) est pourvu d'un filet interne.

15. Boîtier selon l'une quelconque des revendications 11 à 14, caractérisé en ce que l'entrée du boîtier est pourvue d'au moins un évidement sur le côté (52) tourné vers l'élément d'introduction.
